# EUROPEAN PATENT SPECIFICATION

(11) **EP 2 037 247 B1**
(45) Date of publication and mention of the grant of the patent: **07.12.2016**
(21) Application number: 08015880.1
(22) Date of filing: 09.09.2008
(51) Int. Cl.: G01K 13/02, G01K 1/18, G01K 1/08

(54) **Temperature sensor**
Temperatursensor
Capteur de température

(30) Priority: 14.09.2007 GB 0717994
(43) Date of publication of application: 18.03.2009
(73) Proprietor: EPIQ Sensor-Nite N.V., 3980 Tessenderlo (BE)
(72) Inventor: Burssens, Jan-Willem Burssens, 3980 Tessenderlo (BE); Vermeulen, Ewald, 3980 Tessenderlo (BE)
(74) Representative: Wilson Gunn

(56) References cited:
- FR-A1- 2 880 685
- US-A1- 2006 013 282
- US-A1- 2007 195 857

## Description

The present invention relates to a temperature sensor, and in particular to a temperature sensor suitable for monitoring the temperature of gas in a vehicle exhaust system.

In many vehicles the temperature of the exhaust gases is monitored to provide feedback on engine operation. A typical exhaust temperature sensor comprises a temperature dependant resistor element, which is provided within a protective housing. The housing is mounted such that it projects into the exhaust gas flow, with the resistor being mounted at the tip of the housing projecting furthest into the exhaust. An indication of the temperature is obtained by monitoring the resistance of the resistor. This monitoring is facilitated by the provision of a pair of wires running within the housing to connect the resistor to external circuitry. To provide support to the wires and (to some extent) the walls of the housing, the housing is filled with a filler material, typically a compacted powder.

An accurate temperature measurement is difficult to obtain because of the low heat capacity of gas and its low heat conductivity. This problem is exacerbated when the insertion depth of the sensor in to the gas flow is relatively short, which may be necessary to avoid impeding gas flow or to maintain the structural integrity of the housing. Errors in measurement are also compounded by the heat flow through the housing to the exterior of the exhaust, which is normally at a lower temperature.

The heat flow problem has been addressed in current sensor designs by reducing the cross-section of the housing, increasing the insertion depth into the exhaust flow and using filler materials having relatively low thermal conductivity. None of these proposals adequately solve the heat flow problem.

FR 2880685 discloses a temperature sensor for a motor vehicle that comprises a heat sensitive unit placed in a protective housing. A massive ceramic cap is inserted between the unit and the housing. The unit is connected to conducting wires which are insulated and maintained by a ceramic insulating sheath. The cap has an orifice to receive the unit, where the orifice is complimentary to an outer cover of a unit to tightly adopt the surface of the unit.

US2007195857 discloses a temperature sensor suitable for use in a vehicle exhaust. The temperature sensor comprises a temperature sensing portion having a metal housing configured with at least one circular fin on a surface of the metal housing. A temperature sensing element is generally associated with the temperature sensing portion, wherein a potting is located within a gap formed between the temperature sensing element and the metal housing and joined with a ceramic tube for carrying a plurality of high temperature metal lead wires to and from the temperature sensing portion.

It is therefore an object of the present invention to provide a temperature sensor that at least partly alleviates or overcomes the above problems.

According to a first aspect of the present invention there is provided a temperature sensor, suitable for use in a vehicle exhaust, the sensor comprising: a temperature dependent resistor; a pair of connection wires facilitating connection of the resistor to the external circuitry; a housing in which the resistor is mounted and through which the wires run from the resistor to an exit point; and filler material provided within the housing to support the wires and/or resistor wherein there is a gap in the filler material across which the wires run, the gap being provided between the resistor and the exit point, characterised in that the filler material surrounds the resistor and in that the gap extends fully between the side walls of the housing.

The gap impedes the heat flow through the filler material and thus provides thermal decoupling between the resistor and the exterior of the exhaust. This improves the level of accuracy achievable by the sensor.

Preferably, the filler material is a fine grained refractory castable material. This material may be hardened within the housing. Examples of suitable materials include phosphate bonded materials, calcium aluminates or magnesium oxysulfate bonded materials. Such a material provides the necessary level of support for the connecting wires. In contrast, conventional compacted powder filler materials will not provide sufficient support to the connecting wires in the presence of normal mechanical forces such as vibration.

The housing may be formed from any suitable material including but not limited to stainless steel or nickel base alloys. The housing may have a substantially circular cross-section. The resistor is preferably mounted in a projecting end portion of the housing. The projecting end portion may also be of substantially circular cross-section but is preferably of narrower cross-section than the rest of the housing. By having a narrower cross-section heat flow between the exterior of the projecting portion and the resistor is improved.

The sensor may be adapted to be fitted in a hole provided in an exhaust wall. The sensor may be provided with a suitable mounting means for retaining the sensor within the hole. The mounting means may comprise a flange. Alternatively other suitable forms of mounting means may be used such as clamping devices or press fitting.

The exit point for the wires is preferably in a rear portion of the housing beyond the mounting means. The wires may be provided with an insulating sheath.

In order to achieve a better heat transfer from the gas to the temperature sensor an additional heat exchange element may be attached to the housing. The additional heat exchange element may be attached to the housing adjacent to the position where the resistor is mounted. The additional heat exchange element may be a plate providing a large contact surface projecting into the exhaust gas. Such a plate will enable increased heat flow form the exhaust gas to the resistor and hence improve the performance of the sensor. The plate may be provided with one or more surface features or ridges adapted to further increase its surface area. The additional heat exchange element may be formed from metal or other material with good heat conductivity.

According to a second aspect of the present invention there is provided a temperature sensor, suitable for use in a vehicle exhaust, the sensor comprising: a temperature dependent resistor; a pair of connection wires facilitating connection of the resistor to the external circuitry; a housing within which the resistor is mounted and the wires run; and a filler material provided within the housing to support the wires and/or housing wherein an additional heat exchange element is provided upon the portion of the housing within which the resistor is mounted.

The provision of the additional heat exchange element increases the flow of heat from the exhaust gas to the resistor. The increased heat flow from gas to resistor provides a faster response when the exhaust gas temperature rapidly changes and higher measurement accuracy amongst other benefits thus improving the performance of the sensor.

The sensor of the second aspect of the present invention may incorporate any or all features of the first aspect of the present invention as desired or as appropriate.

In order that the invention can be more clearly understood it is now described further below with reference to the accompanying drawings:
- Figure 1: is a schematic diagram of a first embodiment of a temperature sensor according to the present invention; and
- Figure 2: is a schematic diagram of a second embodiment of a temperature sensor according to the present invention.

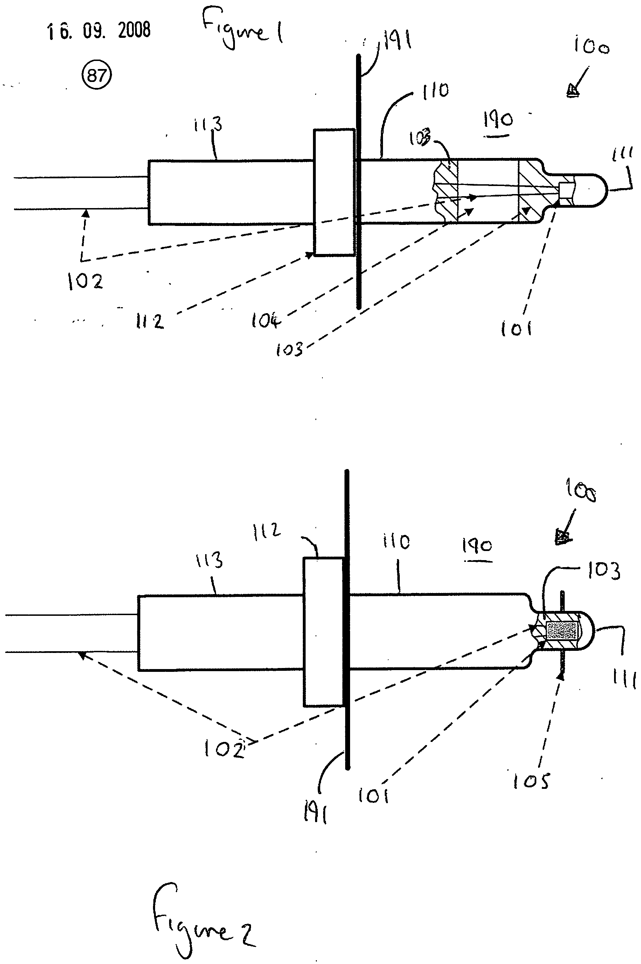

Referring now to figure 1, a temperature sensor 100 projects into an exhaust pipe 190 of a vehicle through a specially provided hole (not shown) in pipe wall 191. The wall 191 divides a hot zone within the pipe 190 from a cold zone exterior to the pipe 190.

The sensor 100 comprises a temperature dependent resistor 101 mounted within a protective housing 110. The housing 110 is formed from materials such as stainless steel, nickel base alloys or similar. The resistor 101 is connected to external circuitry via a pair of connecting wires 102. In use, variations in temperature of the exhaust gas cause a variation in the temperature experienced by the resistor 101. Consequently, the resistance of the resistor 101 also varies. The resistance variation can be monitored by external circuitry via the wires 102 so as to provide an indication of the exhaust gas temperature.

The resistor 101 is mounted in a projecting end portion 111 of the housing which is of narrower cross-section than the bulk of the housing 110. This exposes the resistor 101 more directly to the gas flow and thus improves the heat flow between the resistor 101 and the exhaust gas. The improved heat flow improves the accuracy and response time of the sensor 100.

The housing 110 is retained in position by mounting means 112, which may comprise a flange or any other suitable means. Typically, as is shown in the figure, the sensor may have a rear portion 113 extending beyond the mounting means 112. In some embodiments, the rear portion 113 may house circuitry for monitoring the variation in resistance of the resistor 101.

The housing 110 is filled with a filler material 103. The filler material 103 provides support to the resistor 101 and the wires 102. In the present invention, unlike in prior art sensors, the filler material does not completely fill the housing 110. Instead a gap 104 is provided which is crossed by the wires 102. The gap 104 interrupts heat flow through the filler material and thus improves the thermal isolation of the resistor 101 and thereby the accuracy of the sensor 100.

In the present invention, the filler material 103 is a refractory castable material such as a phosphate bonded material, a calcium aluminate or magnesium oxysulfate bonded material. Such a material provides support to the wires 102 despite the presence of the gap 104. Conventional compacted powder filler material does not provide sufficient support.

Turning now to figure 2, there is provided an alternative embodiment of a temperature sensor 100. The sensor of figure 2 may incorporate all the features of the sensor of figure 1. Accordingly, like reference numerals have been used for like components and the description above of the general form of the sensor 100 of figure 1, will suffice to describe the general form of the sensor 100 of figure 2. The skilled man will of course understand that the sensor 100 of figure 2 need not incorporate all features of the sensor 100 of figure 1. For instance, in some embodiments, the sensor 100 of figure 2, may have a housing 110 substantially filled with compacted powder filler material 103, rather than the refractory castable filler material 103 having a gap 104.

The embodiment of figure 2 is distinguished from that of figure 1 by the provision of an additional heat exchange element 105. The provision of the additional heat exchange element 105 improves the flow of heat from the exhaust gas to the resistor 101, thus providing a faster response when the temperature rapidly changes and higher measurement accuracy. The additional heat exchange element 105 shown is in the form of a simple plate but more complex elements can be used incorporating additional ridges and/or other structures to increase the surface area of the element 105 in contact with the gas. Typically, the heat exchange element is formed from a material having high heat conductivity, such as a metal.

It is of course to be understood that the invention is not to be restricted to the details of the above embodiments which have been described by way of example only.

## Claims

1. A temperature sensor (100), suitable for use in a vehicle exhaust, the sensor comprising: a temperature dependent resistor (101); a pair of connection wires (102) facilitating connection of the resistor to the external circuitry; a housing (110) in which the resistor is mounted and through which the wires run from the resistor to an exit point; and filler material (103) provided within the housing to support the wires and/or resistor wherein there is a gap (104) in the filler material across which the wires run, the gap being provided between the resistor and the exit point, **characterised in that** the filler material (103) surrounds the resistor (101) and **in that** the gap (104) extends fully between the side walls of the housing.

2. A temperature sensor (100) as claimed in claim 1 wherein the filler material (103) is a fine grained refractory castable material hardened within the housing (110).

3. A temperature sensor (100) as claimed in any preceding claim wherein the housing (110) has a substantially circular cross-section with a projecting end portion (111) of the housing of narrower substantially circular cross-section than the rest of the housing and wherein the resistor (101) is mounted in the projecting end portion of the housing.

4. A temperature sensor (100) as claimed in any preceding claim wherein the sensor is adapted to be fitted in a hole provided in an exhaust wall and is provided with a flange, a clamping device or a press fitting for retaining the sensor within the hole.

5. A temperature sensor (100) as claimed in any preceding claim wherein an additional heat exchange element (105) is attached to the housing adjacent to the position where the resistor (101) is mounted.

6. A temperature sensor (100) as claimed in claim 5 wherein the additional heat exchange element (105) is a plate providing a large contact surface projecting into the exhaust gas.

7. A temperature sensor (100) as claimed in claim 6 wherein the plate is provided with one or more surface features or ridges adapted to further increase its surface area.

8. A temperature sensor (100) as claimed in any previous claim, wherein an additional heat exchange element (105) is provided upon the portion of the housing within which the resistor is mounted.

9. A temperature sensor (100) as claimed in claim 8 wherein the additional heat exchange element (105) is a plate providing a large contact surface projecting into the exhaust gas.

10. A temperature sensor (100) as claimed in claim 9 wherein the plate is provided with one or more surface features or ridges adapted to further increase its surface area.

11. A temperature sensor (100) as claimed in claim 8 or claim 9 wherein the additional heat exchange element (105) is formed from metal or other material with good heat conductivity.

12. A temperature sensor (100) as claimed in any one of claims 8 to 10 wherein the filler material (103) is a fine grained refractory castable material that is hardened within the housing.

13. A temperature sensor (100) as claimed in any one of claims 8 to 11 wherein the housing (110) has a substantially circular cross-section with a projecting end portion (111) of the housing of narrower substantially circular cross-section than the rest of the housing and wherein the resistor (101) is mounted in the projecting end portion (111) of the housing.

14. A temperature sensor (100) as claimed in any one of claims 8 to 12 wherein the sensor is adapted to be fitted in a hole provided in an exhaust wall and is provided with a flange, a clamping device or a press fitting for retaining the sensor within the hole.

15. A temperature sensor (100) as claimed in any one of claims 8 to 13 wherein the exit point for the wires is in a rear portion of the housing (110) beyond the mounting means.

## Patentansprüche

1. Ein Temperatursensor (100), geeignet für die Verwendung in einem Fahrzeugabgassystem, wobei der Sensor aufweist:
einen temperaturabhängigen Widerstand (101);
ein Paar von Anschlussdrähten (102), welche die Verbindung der Widerstände zu einer externen Schaltungsanordnung vereinfacht;
ein Gehäuse (110), in welchem der Widerstand angeordnet ist und durch welches die Drähte von dem Widerstand zu einer Austrittsstelle laufen; und
Füllmaterial (103), welches in dem Gehäuse zum Unterstützen der Drähte und/oder des Widerstands vorgesehen ist, wobei ein Spalt (104) in dem Füllmaterial vorgesehen ist, durch welches die Drähte verlaufen, wobei der Spalt zwischen dem Widerstand und der Austrittsstelle vorgesehen ist,
**dadurch gekennzeichnet,**
**dass** das Füllmaterial (103) den Widerstand (101) umgibt und
**dass** der Spalt (104) sich vollständig zwischen den Seitenwänden des Gehäuses erstreckt.

2. Temperatursensor (100) nach Anspruch 1,
**dadurch gekennzeichnet,**
**dass** das Füllmaterial (103) aus einem feinkörnigen, feuerfesten, gießbaren Material besteht, welches innerhalb des Gehäuses (110) aushärtbar ist.

3. Temperatursensor (100) nach einem der voranstehenden Ansprüche,
**dadurch gekennzeichnet,**
**dass** das Gehäuse (110) einen im Wesentlichen kreisförmigen Querschnitt, mit einem vorstehenden Endabschnitt (111) des Gehäuses von schmalerem im Wesentlichen kreisförmigen Querschnitt als der Rest des Gehäuses aufweist, und dass der Widerstand (101) in dem vorstehenden Endabschnitt des Gehäuses angeordnet ist.

4. Temperatursensor (100) nach einem der voranstehenden Ansprüche,
**dadurch gekennzeichnet,**
**dass** der Sensor angepasst ist, in einer Vertiefung einer Abgaswand angeordnet zu werden und mit einem Flansch, einer Klemmvorrichtung oder einer Presspassung zum Halten des Sensors in der Vertiefung ausgebildet ist.

5. Temperatursensor (100) nach einem der voranstehenden Ansprüche,
**dadurch gekennzeichnet,**
**dass** ein zusätzliches Wärmeaustauschelement (105) an dem Gehäuse gegenüberliegend zu der Position des Widerstands (101) angebracht ist.

6. Temperatursensor (100) nach Anspruch 5,
**dadurch gekennzeichnet,**
**dass** das zusätzliche Wärmetauschelement (105) eine große Platte ist, welche eine große Kontaktoberfläche bereitstellt, welche in die Abgase hineinragt.

7. Temperatursensor (100) nach Anspruch 6,
**dadurch gekennzeichnet,**
**dass** die Platte mit einem oder mehreren Oberflächen erhöhenden Merkmalen oder Rippen versehen ist, welche ausgebildet sind, weiter die Oberfläche zu erhöhen.

8. Temperatursensor (100) nach einem der voranstehenden Ansprüche,
**dadurch gekennzeichnet,**
**dass** ein zusätzliches Wärmetauschelement (105) auf dem Bereich des Gehäuses vorgesehen ist, an welchem innerhalb der Widerstand angeordnet ist.

9. Temperatursensor (100) nach Anspruch 8,
**dadurch gekennzeichnet,**
**dass** das zusätzliche Wärmetauschelement (105) eine Platte mit großer Kontaktoberfläche ist, welche in die Abgase hineinragt.

10. Temperatursensor (100) nach Anspruch 9,
**dadurch gekennzeichnet,**
**dass** die Platte mit einem oder mehreren weiter Oberflächen Merkmalen oder Rippen ausgebildet ist, welche ausgebildet sind, weiter die Oberfläche zu erhöhen.

11. Temperatursensor (100) nach einem der Ansprüche 8 oder 9,
**dadurch gekennzeichnet,**
**dass** das zusätzliche Wärmetauschelement (105) aus Metall oder einem Material gebildet ist, welches gute Wärmeleiteigenschaften aufweist.

12. Temperatursensor (100) nach einem der Ansprüche 8 bis 10,
**dadurch gekennzeichnet,**
**dass** das Füllmaterial (103) aus einem feinkörnigen, feuerfesten, gießbaren Material besteht, welches innerhalb des Gehäuses aushärtbar ist.

13. Temperatursensor (100) nach einem der Ansprüche 8 bis 11,
**dadurch gekennzeichnet,**
**dass** das Gehäuse (110) einen im Wesentlichen kreisförmigen Querschnitt, mit einem vorstehenden Endabschnitt (111) des Gehäuses von schmalerem im Wesentlichen kreisförmigen Querschnitt als der Rest des Gehäuses, aufweist und dass der Widerstand (101) in dem vorstehenden Endabschnitt (111) des Gehäuses angeordnet ist.

14. Temperatursensor (100) nach einem der Ansprüche 8 bis 12,
**dadurch gekennzeichnet,**
**dass** der Sensor ausgebildet ist, in einer Vertiefung einer Abgaswand angeordnet zu werden und zum Halten des Sensors in der Vertiefung mit einem Flansch, einer Klemmvorrichtung oder einer Presspassung zum Halten des Sensors in der Vertiefung ausgebildet ist.

15. Temperatursensor (100) nach einem der Ansprüche 8 bis 13,
**dadurch gekennzeichnet,**
**dass** der Austrittspunkt für die Drähte in einem hinteren Teil des Gehäuses (110) jenseits der Befestigungsmittel liegt.

## Revendications

1. Capteur de température (100) approprié pour être utilisé dans un échappement de véhicule, le capteur comprenant : une résistance dépendant de la température (101) ; une paire de fils de connexion (102) facilitant la connexion de la résistance aux circuits externes ; un boîtier (110) dans lequel la résistance est montée et à travers lequel les fils s'étendent de la résistance jusqu'à un point de sortie ; et une matière de remplissage (103) prévue à l'intérieur du boîtier pour supporter les fils et/ou la résistance, dans lequel il y a un espace (104) dans la matière de remplissage sur lequel les fils s'étendent, l'espace étant prévu entre la résistance et le point de sortie, **caractérisé en ce que** la matière de remplissage (103) entoure la résistance (101) et **en ce que** l'espace (104) s'étend complètement entre les parois latérales du boîtier.

2. Capteur de température (100) selon la revendication 1, dans lequel le matériau de remplissage (103) est un matériau réfractaire moulable à grains fins, durci à l'intérieur du boîtier (110).

3. Capteur de température (100) selon l'une quelconque des revendications précédentes, dans lequel le boîtier (110) a une section transversale sensiblement circulaire avec une partie d'extrémité en saillie (111) du boîtier de section transversale sensiblement circulaire plus étroite que le reste du boîtier et dans lequel la résistance (101) est montée dans la partie d'extrémité en saillie du boîtier.

4. Capteur de température (100) selon l'une quelconque des revendications précédentes, dans lequel le capteur est adapté pour être monté dans un trou prévu dans une paroi d'échappement et est prévu avec une bride, un dispositif de serrage ou un ajustement à la presse pour retenir le capteur à l'intérieur du trou.

5. Capteur de température (100) selon l'une quelconque des revendications précédentes, dans lequel un élément d'échange thermique supplémentaire (105) est fixé au boîtier adjacent à la position dans laquelle la résistance (101) est montée.

6. Capteur de température (100) selon la revendication 5, dans lequel l'élément d'échange de chaleur supplémentaire (105) est une plaque fournissant une grande surface de contact faisant saillie dans les gaz d'échappement.

7. Capteur de température (100) selon la revendication 6, dans lequel la plaque est prévue avec une ou plusieurs caractéristiques ou crêtes de surface adaptées pour augmenter davantage sa surface.

8. Capteur de température (100) selon l'une quelconque des revendications précédentes, dans lequel un élément d'échange de chaleur supplémentaire (105) est prévu sur la partie du boîtier à l' intérieur de laquelle la résistance est montée.

9. Capteur de température (100) selon la revendication 8, dans lequel l'élément d'échange de chaleur supplémentaire (105) est une plaque fournissant une grande surface de contact faisant saillie dans le gaz d'échappement.

10. Capteur de température (100) selon la revendication 9, dans lequel la plaque est prévue avec une ou plusieurs caractéristiques ou crêtes de surface adaptées pour augmenter davantage sa surface.

11. Capteur de température (100) selon la revendication 8 ou la revendication 9, dans lequel l'élément d'échange de chaleur supplémentaire (105) est formé à partir de métal ou d'un autre matériau avec une bonne conductivité thermique.

12. Capteur de température (100) selon l'une quelconque des revendications 8 à 10, dans lequel la matière de remplissage (103) est un matériau réfractaire moulable à grains fins, qui est durci à l'intérieur du boîtier.

13. Capteur de température (100) selon l'une quelconque des revendications 8 à 11, dans lequel le boîtier (110) a une section transversale sensiblement circulaire avec une partie d'extrémité en saillie (111) du boîtier de section transversale sensiblement circulaire plus étroite que le reste du boîtier et dans lequel la résistance (101) est montée dans la partie d'extrémité en saillie (111) du boîtier.

14. Capteur de température (100) selon l'une quelconque des revendications 8 à 12, dans lequel le capteur est adapté pour être monté dans un trou prévu dans une paroi d'échappement et est prévu avec une bride, un dispositif de serrage ou un ajustement à la presse pour retenir le capteur à l'intérieur du trou.

15. Capteur de température (100) selon l'une quelconque des revendications 8 à 13, dans lequel le point de sortie pour les fils est dans une partie arrière du boîtier (110) au-delà des moyens de montage.
